# EUROPEAN PATENT APPLICATION

(11) **EP 4 438 931 A1**
(43) Date of publication of application: **02.10.2024**
(21) Application number: 22895391.5
(22) Date of filing: 27.10.2022
(51) Int. Cl.: F16K 31/04, H02P 8/22

(54) **ELECTRIC VALVE CONTROL DEVICE AND ELECTRIC VALVE DEVICE**

(30) Priority: 22.11.2021 JP 2021189668
(71) Applicant: Fujikoki Corporation, Tokyo 158-0082 (JP)
(72) Inventor: HAGIMOTO, Hiroshi, Tokyo 158-0082 (JP); OGIWARA, Kai, Tokyo 158-0082 (JP)
(74) Representative: Ter Meer Steinmeister & Partner
(86) International application number: PCT/JP2022/040070
(87) International publication number: WO 2023/090107

(57) **Abstract**

[Object] To provide an electric valve control device and an electric valve device capable of suppressing the rise in an internal temperature of a motor driver.

[Solution] A computer (80) of an electric valve control device (70) is configured to obtain, upon reception of a valve-opening-degree changing instruction including a target valve opening degree of an electric valve (5), a target number that is the number of pulses to be input to a motor driver (77) to change a valve opening degree of the electric valve (5) to the target valve opening degree. The computer (80) is configured to continuously input the target number of pulses to the motor driver (77) when an ambient temperature of the motor driver (77) is determined not to be high. The computer (80) is configured to continuously input pulses to the motor driver (77) in units of a predetermined number until the number of pulses input to the motor driver (77) reaches the target number and insert a pulse-input pausing period after each unit of the predetermined number of pulses is input, when the ambient temperature is determined to be high.

## Description

### Technical Field

The present invention relates to an electric valve control device and an electric valve device including the electric valve control device.

### Background Art

Patent Literature 1 discloses an example of an electric valve device according to the related art. The electric valve device includes an electric valve and an electric valve control device. The electric valve is installed in a refrigeration cycle system of an air conditioner. The electric valve includes a valve body, a valve member, and a stepping motor for moving the valve member. The stepping motor includes a rotor and a stator. The stepping motor is connected to a motor driver of the electric valve control device. When pulses are input to the motor driver, the motor driver supplies driving currents corresponding to pulses to the stator to rotate the rotor. The valve member moves along with the rotation of the rotor, changing the valve opening degree of the electric valve.

The electric valve control device controls the electric valve. The electric valve control device changes the valve opening degree of the electric valve within a range from the minimum opening degree to the maximum opening degree. When the electric valve control device receives, from an air conditioner control device, a valve-opening-degree changing instruction that includes a target valve opening degree of the electric valve, the electric valve control device calculates the number of pulses based on the target valve opening degree and inputs the number of pulses to the motor driver. As a result, the valve opening degree of the electric valve is changed to the target valve opening degree.

### Citation List

### Patent Literature

Patent Literature 1: WO2019/130928

### Summary of Invention

### Technical Problem

The motor driver includes a die on which an integrated circuit is formed and an IC package enclosing the die. A range of the ambient temperature of the motor driver in operation is referred to as an operating temperature range and is defined based on the junction temperature of the motor driver. The electric valve device may be placed in high-temperature environments, such as an engine compartment of a vehicle. When the motor driver operates in high-temperature environments, the internal temperature of the motor driver tends to rise quickly. The rise in the internal temperature may cause the motor driver to malfunction and/or fail.

Accordingly, it is an object of the present invention to provide an electric valve control device capable of suppressing the rise in an internal temperature of a motor driver and an electric valve device including the electric valve control device.

### Solution to Problem

To achieve the object above, an electric valve control device according to an aspect of the present invention is an electric valve control device for controlling an electric valve that includes a stepping motor. The electric valve control device includes a controller configured to input a pulse to a motor driver connected to the stepping motor. The motor driver supplies a driving current corresponding to the pulse to the stepping motor. The controller is configured to obtain, upon reception of a valve-opening-degree changing instruction including a target valve opening degree of the electric valve, a target number that is a number of pulses to be input to the motor driver to change a valve opening degree of the electric valve to the target valve opening degree. The controller is configured to continuously input the target number of pulses to the motor driver when an ambient temperature of the motor driver is determined not to be high. The controller is configured to obtain a predetermined number that is a number of pulses to be continuously input to the motor driver, continuously input pulses to the motor driver in units of the predetermined number until the number of pulses input to the motor driver reaches the target number, and insert a pulse-input pausing period after each unit of the predetermined number of pulses is input, when the ambient temperature is determined to be high.

In the present invention, preferably, the stepping motor includes an A-phase stator and a B-phase stator. Preferably, the motor driver supplies the driving current corresponding to the pulse to the A-phase stator and the B-phase stator. Preferably, a pulse input to the motor driver immediately before the pulse-input pausing period is a pulse that directs the motor driver to supply the driving current exclusively to either the A-phase stator or the B-phase stator.

In the present invention, preferably, a duration of the pulse-input pausing period is longer than or equal to a duration required for inputting the predetermined number of pulses immediately before the pulse-input pausing period.

To achieve the object above, an electric valve device according to another aspect of the present invention is an electric valve device including the electric valve that includes the stepping motor and the electric valve control device.

### Advantageous Effects of Invention

When the electric valve control device determines that the ambient temperature of the motor driver is not high, the electric valve control device continuously inputs the target number of pulses to the motor driver at one time. When the electric valve control device determines that the ambient temperature of the motor driver is high, the electric valve control device does not input the target number of pulses to the motor driver at one time but inputs pulses to the motor driver in units of the predetermined number. The electric valve control device inserts the pulse-input pausing period where no pulse is input after each unit of the predetermined number of pulses is input. Therefore, the motor driver can be inhibited from continuous long-term operation, thereby suppressing the rise in the internal temperature of the motor driver.

### Brief Description of Drawings

[Fig. 1] Fig. 1 is a block diagram of an air conditioning system including an electric valve device according to an embodiment of the present invention.
[Fig. 2] Fig. 2 is a sectional view of the electric valve device in Fig. 1.
[Fig. 3] Fig. 3 is a plan view of a valve stem holder, a stopper member, a rotor, and a stator of the electric valve device in Fig. 1.
[Fig. 4] Fig. 4 is a diagram illustrating a computer, a motor driver, and a stepping motor of the electric valve device in Fig. 1.
[Fig. 5] Fig. 5 is a diagram illustrating an example of a data table showing correspondence between the number of pulses input to the motor driver and a valve opening degree of an electric valve.
[Fig. 6] Fig. 6 is a flowchart illustrating an example of a process executed by the computer of the electric valve device in Fig. 1.
[Fig. 7] Fig. 7 is a flowchart illustrating the example of the process executed by the computer of the electric valve device in Fig. 1 (following the flowchart in Fig. 6).
[Fig. 8] Fig. 8 includes a graph showing a time variation of the number of pulses input to the motor driver and a graph showing a time variation of an internal temperature of the motor driver (when a target number of pulses is continuously input).
[Fig. 9] Fig. 9 includes a graph showing a time variation of the number of pulses input to the motor driver and a graph showing a time variation of the internal temperature of the motor driver (when pulses are input in units of a predetermined number and a pulse-input pausing period is inserted after each unit of the predetermined number of pulses is input).

### Description of Embodiments

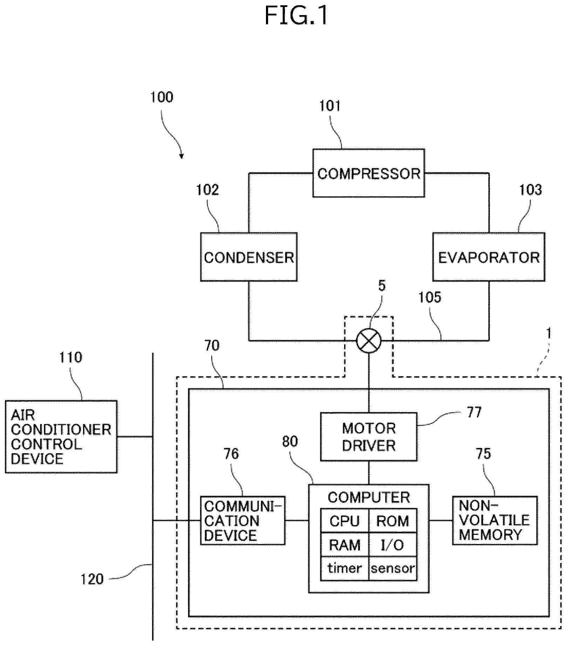

A configuration of an electric valve device according to an embodiment of the present invention is described below with reference to Fig. 1 to Fig. 5. An electric valve device 1 according to the embodiment is used as, for example, a flow control valve for controlling the flow rate of refrigerant in a refrigeration cycle system of an air conditioner.

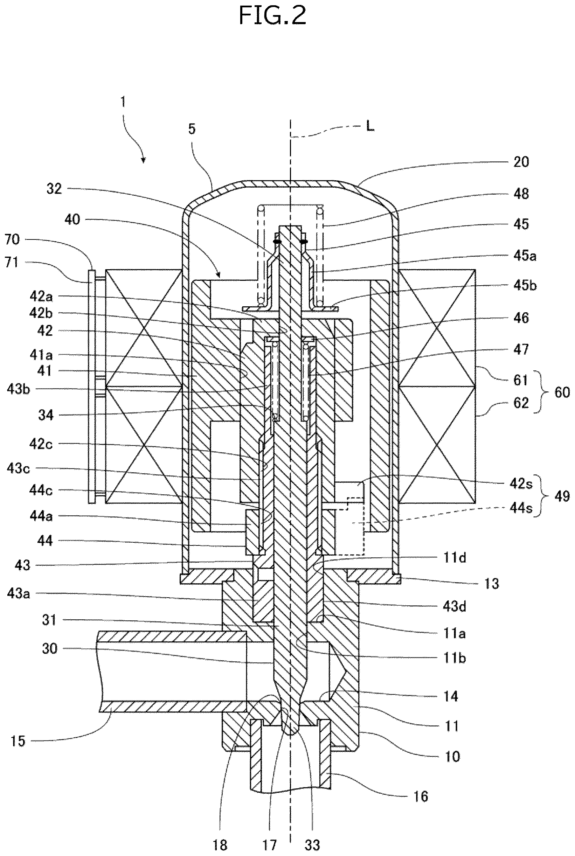

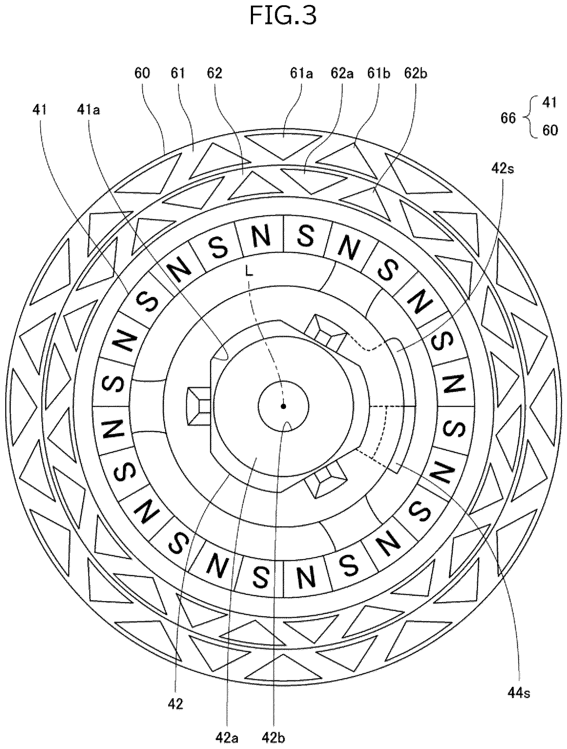

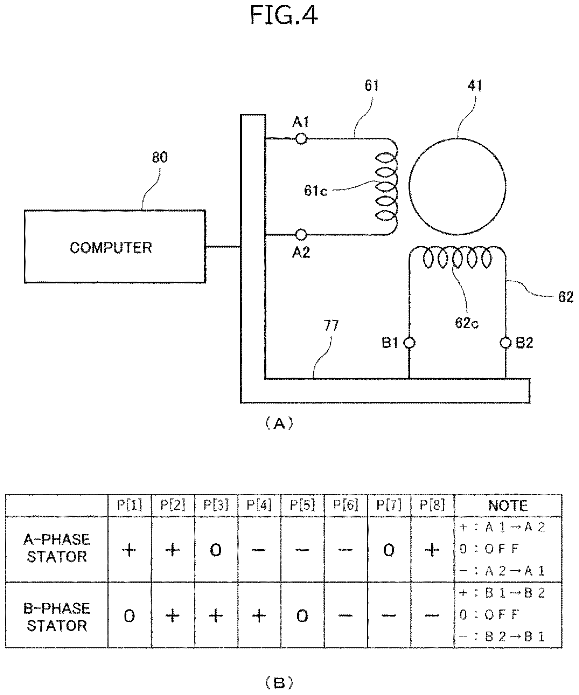

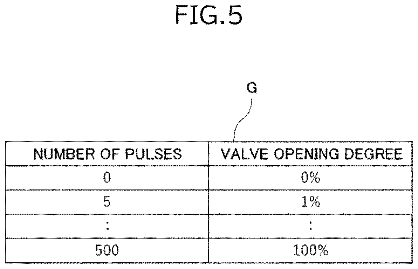

Fig. 1 is a block diagram of an air conditioning system including an electric valve device according to the embodiment of the present invention. Fig. 2 is a sectional view of the electric valve device in Fig. 1. Fig. 2 schematically illustrates a stator and an electric valve control device. In Fig. 2, illustration of a housing in which the stator and the electric valve control device are housed is omitted. Fig. 3 is a plan view of a valve stem holder, a stopper member, a rotor, and the stator of the electric valve device in Fig. 1. Fig. 3 schematically illustrates the stator and magnetic poles of the rotor. Fig. 4 is a diagram illustrating a computer, a motor driver, and a stepping motor of the electric valve device in Fig. 1. Fig. 4A schematically illustrates connections among the computer, the motor driver, and the stepping motor. Fig. 4B shows an example of correspondence between pulses and driving currents supplied to the stator by the motor driver. Fig. 5 is a diagram illustrating an example of a data table showing correspondence between the number of pulses input to the motor driver and a valve opening degree of an electric valve.

Fig. 1 illustrates an example of an air conditioning system 100 mounted in a vehicle. The air conditioning system 100 includes a compressor 101, a condenser 102, the electric valve device 1 (an electric valve 5), and an evaporator 103, which are connected in this order by a pipe 105. The electric valve device 1 functions as an expansion valve. The air conditioning system 100 includes an air conditioner control device 110. The air conditioner control device 110 is connected to the electric valve device 1 and can communicate with the electric valve device 1. The air conditioner control device 110 uses the electric valve device 1 to control the flow rate of refrigerant flowing through the pipe 105.

As illustrated in Fig. 2, the electric valve device 1 includes the electric valve 5 and an electric valve control device 70.

The electric valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14. A first conduit 15 and a second conduit 16 are bonded to the body member 11. The first conduit 15 is disposed in a direction (a lateral direction in Fig. 2) perpendicular to an axis L and is connected to the valve chamber 14. The second conduit 16 is disposed in a direction (an up-and-down direction in Fig. 2) of the axis L and is connected to the valve chamber 14 via a valve port 17. The valve port 17 is enclosed by a valve seat 18, which has a circular annular shape, in the valve chamber 14. The body member 11 has a fitting hole 11a, which has a circular shape. The fitting hole 11a is provided in the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has an annular plate-like shape. The inner peripheral edge of the connection member 13 is bonded to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, and a valve portion 33. The first stem portion 31 has a circular columnar shape. The second stem portion 32 has a circular columnar shape. The diameter of the second stem portion 32 is smaller than that of the first stem portion 31. The second stem portion 32 is provided coaxially and continuously with the upper end of the first stem portion 31. The valve member 30 has a step portion 34. The step portion 34 is an annular plane facing upward. The step portion 34 is disposed in the part where the second stem portion 32 is continuous with the first stem portion 31. The valve portion 33 has a substantially conical shape with a diameter decreasing from top to bottom. The valve portion 33 is provided coaxially and continuously with the lower end of the first stem portion 31. The valve portion 33 is disposed in the valve port 17. A variable throttle passage is formed between the valve portion 33 and the valve port 17. The valve portion 33 faces the valve seat 18. The valve port 17 is closed when the valve portion 33 is in contact with the valve seat 18.

The driving mechanism 40 moves the valve member 30 in the up-and-down direction (the direction of the axis L). The movement of the valve member 30 changes the opening degree of the valve port 17 (i.e., the valve opening degree of the electric valve 5). The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged at regular angular intervals in the circumferential direction. In the embodiment, the rotor 41 includes twelve N poles and twelve S poles. The angle between the N pole and the S pole adjacent to each other is 15 degrees.

The valve stem holder 42 has a circular cylindrical shape. The valve stem holder 42 is open at the lower end and is closed at the upper end. The valve stem holder 42 is fitted into a fitting hole 41a of the rotor 41. The valve stem holder 42 rotates together with the rotor 41. A movable stopper 42s is disposed at the lower end of the outer circumferential surface of the valve stem holder 42. The movable stopper 42s is a protrusion radially extending outward from the outer circumferential surface of the valve stem holder 42. The valve stem holder 42 has a stem hole 42b. The stem hole 42b is provided in an upper wall portion 42a of the valve stem holder 42. The second stem portion 32 of the valve member 30 is disposed in the stem hole 42b movably in the direction of the axis L. The upper wall portion 42a of the valve stem holder 42 has a lower surface on which a washer 46 is disposed. A valve closing spring 47 is disposed between the washer 46 and the step portion 34 of the valve member 30. The valve closing spring 47 is a coil spring and pushes the valve member 30 toward the valve seat 18. The inner circumferential surface of the valve stem holder 42 has an internal thread 42c. The movable stopper 42s is fixed with respect to the rotor 41.

The guide bush 43 includes a base portion 43a and a support portion 43b. The base portion 43a has a circular cylindrical shape. The support portion 43b has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with that of the body member 11 on the axis L and allows the guide bush 43 to be appropriately positioned with respect to the body member 11 about the axis L. The outer diameter of the support portion 43b is smaller than that of the base portion 43a. The inner diameter of the support portion 43b is equal to that of the base portion 43a. The support portion 43b is provided coaxially and continuously with the upper end of the base portion 43a. The outer circumferential surface of the support portion 43b has an external thread 43c. The external thread 43c is screwed into the internal thread 42c of the valve stem holder 42. The valve stem holder 42 and the guide bush 43 constitute a thread mechanism that changes the rotation of the rotor 41 into a linear movement. The first stem portion 31 of the valve member 30 is disposed inside the guide bush 43. The guide bush 43 supports the valve member 30 movably in the direction of the axis L.

The stopper member 44 includes a stopper body 44a. The stopper body 44a has a circular cylindrical shape. The inner circumferential surface of the stopper body 44a has an internal thread 44c. A fixed stopper 44s is disposed on the outer circumferential surface of the stopper body 44a. The fixed stopper 44s is a protrusion radially extending outward from the outer circumferential surface of the stopper body 44a. The external thread 43c is screwed into the internal thread 44c until the stopper body 44a comes into contact with the base portion 43a of the guide bush 43, which fixes the stopper member 44 to the guide bush 43. The fixed stopper 44s is fixed with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is provided continuously with the lower end of the fixed portion 45a. A return spring 48 is disposed such that the return spring 48 encloses the fixed member 45. The return spring 48 is a coil spring. Note that the return spring 48 is not an essential member in the present invention.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point down, and the tip ends of the pole teeth 61b point up. The pole teeth 61a and the pole teeth 61b are alternately arranged at regular angular intervals in the circumferential direction. In the embodiment, the A-phase stator 61 includes twelve pole teeth 61a and twelve pole teeth 61b. The angle between the pole tooth 61a and the pole tooth 61b adjacent to each other is 15 degrees. When a coil 61c of the A-phase stator 61 is energized, the pole teeth 61a and the pole teeth 61b have opposite polarities.

The B-phase stator 62 includes a plurality of claw-pole type pole teeth 62a and 62b in the inner circumference. The tip ends of the pole teeth 62a point down, and the tip ends of the pole teeth 62b point up. The pole teeth 62a and the pole teeth 62b are alternately arranged at regular angular intervals in the circumferential direction. In the embodiment, the B-phase stator 62 includes twelve pole teeth 62a and twelve pole teeth 62b. The angle between the pole tooth 62a and the pole tooth 62b adjacent to each other is 15 degrees. When a coil 62c of the B-phase stator 62 is energized, the pole teeth 62a and the pole teeth 62b have opposite polarities.

The A-phase stator 61 is coaxially disposed on the B-phase stator 62. The A-phase stator 61 is in contact with the B-phase stator 62. When viewed in the direction of the axis L, the angle between the pole tooth 61a of the A-phase stator 61 and the pole tooth 62a of the B-phase stator 62 adjacent to each other is 7.5 degrees. In other words, the B-phase stator 62 is in a position where the B-phase stator 62 is rotated relatively to the A-phase stator 61 about the axis L by 7.5 degrees from the position where the pole tooth 61a and the pole tooth 62a are arranged in the direction of the axis L. As illustrated in Fig. 4A, terminals A1 and A2 of the coil 61c of the A-phase stator 61 and terminals B1 and B2 of the coil 62c of the B-phase stator 62 are connected to a motor driver 77 of the electric valve control device 70.

The can 20 is disposed inside the stator 60. The rotor 41 is disposed inside the can 20. The stator 60 and the rotor 41 are members of a stepping motor 66.

The rotor 41 is rotated by pulses P input to the stepping motor 66. Specifically, the rotor 41 is rotated by driving currents, corresponding to pulses P, supplied to the stator 60 of the stepping motor 66. In this specification, "inputting pulses P to the stepping motor 66" is synonymous with "supplying driving currents corresponding to pulses P to the stator 60 of the stepping motor 66".

Pulses P[1] to P[8] illustrated in Fig. 4B are input to the stepping motor 66 in order. In the embodiment, the rate of pulses P is 125 pps. The rate of pulses P may be 400 pps. The rate of pulses P is set as appropriate according to a system in which the electric valve device 1 is installed.

In rotating the rotor 41 in a first direction (clockwise in Fig. 3), pulses P are cyclically input to the stepping motor 66 in ascending order (in the order from pulse P[1] to pulse P[8]). When the rotor 41 rotates in the first direction, the screw feed action of the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the valve portion 33 comes into contact with the valve seat 18. At this time, the rotor 41 is at a valve closing position Rc. When the rotor 41 at this position further rotates in the first direction, the valve closing spring 47 is compressed and the rotor 41 and the valve stem holder 42 further move downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s are members of a stopper mechanism 49 that restricts the rotor 41 from rotating in the first direction.

In rotating the rotor 41 in a second direction (counter clockwise in Fig. 3) opposite to the first direction, pulses P are cyclically input to the stepping motor 66 in descending order (in the order from pulse P[8] to pulse P[1]). When the rotor 41 rotates in the second direction, the screw feed action of the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. The rotor 41 is considered to be at a valve opening position Ro when a fluid flow rate at the valve port 17 reaches a predetermined value in a predetermined flow-rate measuring environment. The predetermined value is set as appropriate according to the configuration and application of the electric valve device 1.

When the rotor 41 rotates in the first direction, the valve port 17 is closed. When the rotor 41 rotates in the second direction, the valve port 17 opens. That is, the first direction is a valve closing direction, and the second direction is a valve opening direction.

The opening degree of the valve port 17 is related to the valve opening degree of the electric valve 5. The electric valve control device 70 controls the electric valve 5 such that the valve opening degree of the electric valve 5 is within a range from a minimum opening degree (0%) to a maximum opening degree (100%).

The minimum and maximum opening degrees of the valve opening degree used by the electric valve control device 70 for controlling the electric valve 5 are described. When the rotor 41 is at the position (the reference position Rx) where the rotation of the rotor 41 in the first direction is restricted by the stopper mechanism 49, the valve opening degree of the electric valve 5 is the minimum opening degree (0%). When the rotor 41 is at a position (a full-open position Rz) where the opening degree of the valve port 17 is equal to an opening degree allowing a flow of refrigerant having a flow rate that is 90% of a maximum flow rate (for example, a Cv value) of the electric valve 5, the valve opening degree of the electric valve 5 is the maximum opening degree (100%). The number of pulses P required to rotate the rotor 41 from the reference position Rx to the full-open position Rz is 500.

The settings of the minimum and maximum opening degrees of the valve opening degree used by the electric valve control device 70 for controlling the electric valve 5 are not limited to those of the minimum and maximum opening degrees described above. For example, the minimum opening degree (0%) may be the valve opening degree of the electric valve 5 when the rotor 41 is at a position where the valve leakage amount of the electric valve 5 has reached a predetermined flow rate as the rotor 41 rotates in the valve opening direction from the valve closing position Rc. Alternatively, the minimum opening degree (0%) may be the valve opening degree of the electric valve 5 when the rotor 41 is at the valve closing position Rc or the valve opening position Ro. The maximum opening degree (100%) may be the valve opening degree of the electric valve 5 when the rotor 41 is at a position immediately before the internal thread 42c and the external thread 43c are unscrewed.

The electric valve control device 70 includes a circuit board 71 on which electronic components (not illustrated) are mounted. The circuit board 71 and the stator 60 are contained in a housing (not illustrated) made of a synthetic resin. As illustrated in Fig. 1, the electric valve control device 70 includes a non-volatile memory 75, a communication device 76, the motor driver 77, and a computer 80. The electric valve control device 70 controls the electric valve 5 according to an instruction received from the air conditioner control device 110.

The non-volatile memory 75 stores data required to be held even if power is turned off. The non-volatile memory 75 is, for example, EEPROM or flash memory.

The communication device 76 is connected to the air conditioner control device 110 via a wired communication bus 120 and is able to communicate with the air conditioner control device 110. The air conditioning system 100 utilizes a communication system such as Local Interconnection Network (LIN) or Controller Area Network (CAN). The communication device 76 may be wirelessly connected to the air conditioner control device 110 and be able to wirelessly communicate with the air conditioner control device 110.

The motor driver 77 supplies the driving currents to the stepping motor 66 based on pulses P input from the computer 80. As illustrated in Fig. 4A, the motor driver 77 is connected to the terminals A1 and A2 of the coil 61c of the A-phase stator 61 and the terminals B1 and B2 of the coil 62c of the B-phase stator 62. Fig. 4B illustrates an example of correspondence between pulses P and the driving currents supplied by the motor driver 77. In Fig. 4B, (+) denotes supplying the driving current flowing from the terminal A1 to the terminal A2 or the driving current flowing from the terminal B1 to the terminal B2. (-) denotes supplying the driving current flowing from the terminal A2 to the terminal A1 or the driving current flowing from the terminal B2 to the terminal B1. (0) denotes supplying no driving current.

The motor driver 77 supplies the driving current only to the coil 61c of the A-phase stator 61 when pulse P[1] or P[5] is input to the motor driver 77. Supplying the driving current only to the coil 61c causes the magnetic poles of the rotor 41 to radially face the pole teeth 61a and 61b of the A-phase stator 61. When the motor driver 77 ceases to supply the driving current to the coil 61c in this state, the magnetic poles of the rotor 41 attract the pole teeth 61a and 61b of the A-phase stator 61, resulting in a relatively large detent torque of the stepping motor 66.

The motor driver 77 supplies the driving current only to the coil 62c of the B-phase stator 62 when pulse P[3] or P[7] is input to the motor driver 77. Supplying the driving current only to the coil 62c causes the magnetic poles of the rotor 41 to radially face the pole teeth 62a and 62b of the B-phase stator 62. When the motor driver 77 ceases to supply the driving current to the coil 62c in this state, the magnetic poles of the rotor 41 attract the pole teeth 62a and 62b of the B-phase stator 62, resulting in a relatively large detent torque of the stepping motor 66.

Large detent torque of the stepping motor 66 inhibits the rotor 41 from rotating due to vibrations or the like.

The motor driver 77 supplies the driving currents to both the coil 61c of the A-phase stator 61 and the coil 62c of the B-phase stator 62 when pulse P[2], P[4], P[6], or P[8] is input to the motor driver 77. When the motor driver 77 ceases to supply the driving currents to the coils 61c and 62c in this state, the detent torque of the stepping motor 66 is relatively small.

The computer 80 is a microcomputer for embedded devices that incorporates a CPU, ROM, RAM, an input/output interface (I/O), a timer, a temperature sensor (sensor), or the like in a single package. The computer 80 is located near the motor driver 77 such that the temperature sensor can measure an ambient temperature Ta of the motor driver 77. The computer 80 may incorporate the non-volatile memory 75, the communication device 76, and the motor driver 77. An external temperature sensor and/or an external analog-to-digital converter may be connected to the computer 80. The computer 80 serves as a controller.

The ROM of the computer 80 stores, for example, a program executed by the CPU and various setting values that do not require rewriting.

In the embodiment, the ROM of the computer 80 stores a data table G. The data table G shows correspondence between the number of pulses input to the motor driver 77 and the valve opening degree of the electric valve 5. Specifically, in the data table G, the number of pulses P (0 to 500) input to the motor driver 77 when the rotor 41 is at the reference position Rx is associated with the valve opening degree (0 to 100%) corresponding to a position of the rotor 41 positioned by the number of pulses P input to the motor driver 77. Fig. 5 illustrates an example of the data table G. The correspondence between the number of pulses input to the stepping motor 66 and the valve opening degree of the electric valve 5 may be shown by a calculation formula.

The ROM of the computer 80 stores a predetermined number Nu. The predetermined number Nu is the number of pulses P to be continuously input to the motor driver 77 when the ambient temperature Ta of the motor driver 77 is high. When the computer 80 determines that the ambient temperature Ta of the motor driver 77 is high, the computer 80 operates such that the number of pulses P continuously input to the motor driver 77 does not exceed the predetermined number Nu. The predetermined number Nu is set as the number (an allowance number) of pulses P allowed to be continuously input when the ambient temperature Ta of the motor driver 77 is high. In the embodiment, the predetermined number Nu is set to 24. The predetermined number Nu is set to any value within a range from 2 to 250.

The ROM of the computer 80 stores a duration E of a pulse-input pausing period. During the pulse-input pausing period, the computer 80 does not input any pulses P to the motor driver 77. The pulse-input pausing period is inserted after the predetermined number Nu of pulses P are input to the motor driver 77. In the embodiment, the duration E of the pulse-input pausing period is 192 ms and equal to a duration required for continuously inputting the predetermined number Nu of pulses P. The duration E is set to any value within a range from 16 to 2000 ms. Preferably, the duration E is longer than or equal to the duration required for inputting the predetermined number Nu of pulses P immediately before the pulse-input pausing period.

The ROM of the computer 80 stores a high-temperature threshold Th. The high-temperature threshold Th is used to determine whether the ambient temperature Ta of the motor driver 77 is high.

The non-volatile memory 75 may store the data table G, the predetermined number Nu, the duration E of the pulse-input pausing period, and the high-temperature threshold Th.

The RAM of the computer 80 serves as a working memory used by the CPU when the CPU executes the programs. The RAM of the computer 80 stores a present valve opening degree Dc indicating the valve opening degree of the electric valve 5 at present. The present valve-opening degree Dc is copied from the RAM to the non-volatile memory 75 when the electric valve control device 70 is powered off or enters a sleep mode. The present valve-opening degree Dc is copied from the non-volatile memory 75 to the RAM when the electric valve control device 70 is powered on or resumes from the sleep mode. The RAM of the computer 80 stores a first counter value C1 and a second counter value C2.

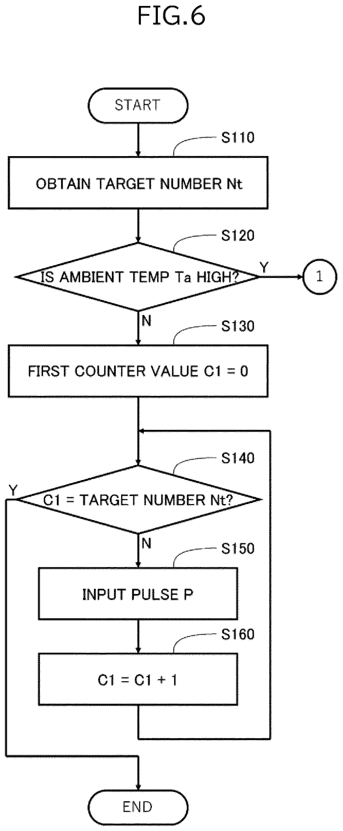

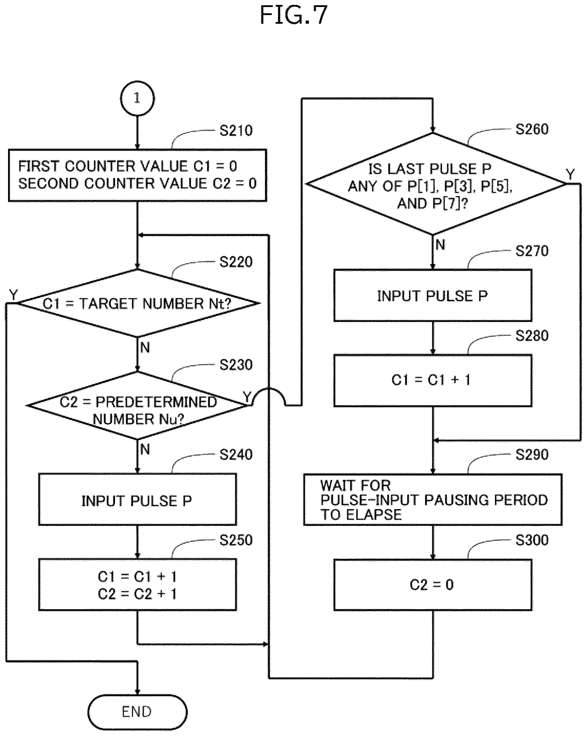

Next, an example of a process executed by the electric valve control device 70 is described below with reference to Fig. 6 and Fig. 7. Fig. 6 and Fig. 7 are flowcharts illustrating the example of the process executed by the computer 80 of the electric valve device 1 in Fig. 1

The electric valve control device 70 (specifically, the computer 80) enters an operating mode when the electric valve control device 70 is powered on or resumes from the sleep mode. In the operating mode, the electric valve control device 70 waits for an instruction from the air conditioner control device 110. When the electric valve control device 70 receives a valve-opening-degree changing instruction from the air conditioner control device 110, the electric valve control device 70 executes the process illustrated in the flowcharts in Fig. 6 and Fig. 7. The valve-opening-degree changing instruction contains a target value (a target valve-opening degree Dt) of the valve opening degree of the electric valve 5.

The electric valve control device 70 obtains a target number Nt based on the target valve opening degree Dt contained in the valve-opening-degree changing instruction (S110). The target number Nt is the number of pulses P to be input to the motor driver 77 to change the valve opening degree to the target valve opening degree Dt. Specifically, the electric valve control device 70 obtains the target valve opening degree Dt from the valve-opening-degree changing instruction and reads the present valve opening degree Dc from the RAM. The electric valve control device 70 refers to the data table G and obtains, as the target number Nt, a difference value between the number of pulses associated with the target valve opening degree Dt and the number of pulses associated with the present valve opening degree Dc.

The electric valve control device 70 determines whether the ambient temperature Ta of the motor driver 77 is high (S120). Specifically, the electric valve control device 70 obtains the ambient temperature Ta of the motor driver 77 based on a signal from the temperature sensor and compares the ambient temperature Ta with the high-temperature threshold Th.

When the ambient temperature Ta is lower than the high-temperature threshold Th (N in S120), the electric valve control device 70 determines that the ambient temperature Ta is not high and executes a normal process (S130 to S160). When the ambient temperature Ta is higher than or equal to the high-temperature threshold Th (N in S120), the electric valve control device 70 determines that the ambient temperature Ta is high and executes a high-temperature process (S210 to S300) .

In the normal process, the electric valve control device 70 sets the first counter value C1 to zero (S130). The electric valve control device 70 determines whether the first counter value C1 is equal to the target number Nt (S140). When the first counter value C1 is not equal to the target number Nt (N in S140), the electric valve control device 70 inputs one pulse P to the motor driver 77 (S150). At this time, when the target valve opening degree Dt is smaller than the present valve opening degree Dc, the electric valve control device 70 inputs a pulse P in ascending order. The rotor 41 rotates in the valve closing direction. When the target valve opening degree Dt is greater than the present valve opening degree Dc, the electric valve control device 70 inputs a pulse P in descending order. The rotor 41 rotates in the valve opening direction. The electric valve control device 70 increases the first counter value C1 by one (S160) and returns to the determination of the first counter value C1 (S140). The electric valve control device 70 repeats inputting a pulse P until the first counter value C1 reaches the target number Nt (S140 to S160). When the first counter value C1 reaches the target number Nt (Y in S140), the electric valve control device 70 stores the target valve opening degree Dt in the RAM as the present valve opening degree Dc and finishes the process.

In the high-temperature process, the electric valve control device 70 sets the first counter value C1 to zero and the second counter value C2 to zero (S210). The electric valve control device 70 reads the predetermined number Nu from the ROM. The electric valve control device 70 determines whether the first counter value C1 is equal to the target number Nt and whether the second counter value C2 is equal to the predetermined number Nu (S220, S230). When the first counter value C1 is not equal to the target number Nt and the second counter value C2 is not equal to the predetermined number Nu (N in S220, N in S230), the electric valve control device 70 inputs one pulse P to the motor driver 77 (S240). At this time, when the target valve opening degree Dt is smaller than the present valve opening degree Dc, the electric valve control device 70 inputs a pulse P in ascending order. The rotor 41 rotates in the valve closing direction. When the target valve opening degree Dt is greater than the present valve opening degree Dc, the electric valve control device 70 inputs a pulse P in descending order. The rotor 41 rotates in the valve opening direction. The electric valve control device 70 increases the first counter value C1 by one and increases the second counter value C2 by one (S250). The electric valve control device 70 returns to the determination of the first counter value C1 (S220).

When the first counter value C1 is not equal to the target number Nt and the second counter value C2 is equal to the predetermined number Nu (N in S220, Y in S230), the electric valve control device 70 determines whether the last pulse P input to the motor driver 77 is any of pulses P[1], P[3], P[5], and P[7] (S260).

When the last pulse P input to the motor driver 77 is not any of pulses P[1], P[3], P[5], and P[7] (N in S260), the electric valve control device 70 inputs one pulse P to the motor driver 77 (S270) . At this time, when the target valve opening degree Dt is smaller than the present valve opening degree Dc, the electric valve control device 70 inputs a pulse P in ascending order. The rotor 41 rotates in the valve closing direction. When the target valve opening degree Dt is greater than the present valve opening degree Dc, the electric valve control device 70 inputs a pulse P in descending order. The rotor 41 rotates in the valve opening direction.

In step S270, pulse P[1], P[3], P[5], or P[7] is input to the motor driver 77 by the electric valve control device 70. That is, when pulse P[2] is the last pulse P input to the motor driver 77, pulse P[1] or P[3] is the next pulse P to be input to the motor driver 77. When pulse P[4] is the last pulse P input to the motor driver 77, pulse P[3] or P[5] is the next pulse P to be input to the motor driver 77. When pulse P[6] is the last pulse P input to the motor driver 77, pulse P[5] or P[7] is the next pulse P to be input to the motor driver 77. When pulse P[8] is the last pulse P input to the motor driver 77, pulse P[7] or P[1] is the next pulse P to be input to the motor driver 77. The electric valve control device 70 increases the second counter value C2 by one (S280), sets the duration E on the timer, and waits for the pulse-input pausing period to elapse (S290) .

When the last pulse P input to the motor driver 77 is any of pulses P[1], P[3], P[5], and P[7] (Y in S260), the electric valve control device 70 sets the duration E on the timer and waits for the pulse-input pausing period to elapse (S290).

During the pulse-input pausing period, the electric valve control device 70 does not input a pulse P to the motor driver 77 and the motor driver 77 does not supply a driving current to the A-phase stator 61 and B-phase stator 62. The last pulse P input to the motor driver 77 is any of pulses P[1], P[3], P[5], and P[7], resulting in a relatively large detent torque of the stepping motor 66 during the pulse-input pausing period.

When the pulse-input pausing period has elapsed, the electric valve control device 70 sets the second counter value C2 to zero (S300) and returns to the determination of the first counter value C1 (S220).

The electric valve control device 70 repeats inputting pulses P until the first counter value C1 reaches the target number Nt (S220 to S300). When the first counter value C1 reaches the target number Nt (Y in S220), the electric valve control device 70 stores the target valve opening degree Dt in the RAM as the present valve opening degree Dc and finishes the process.

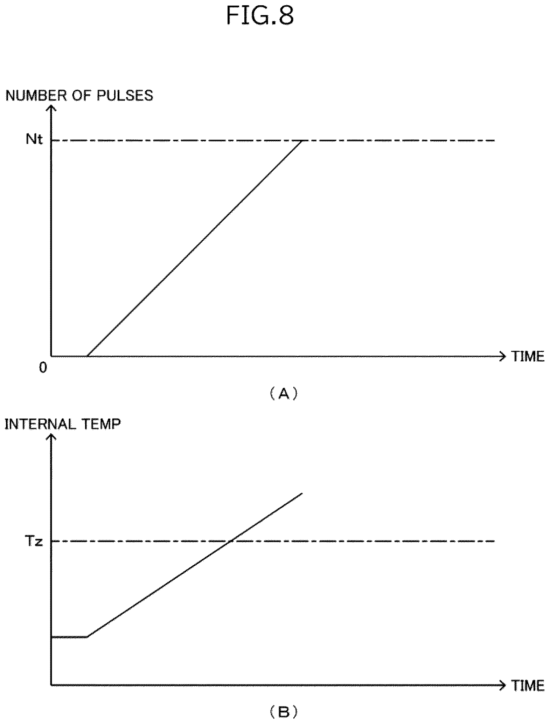

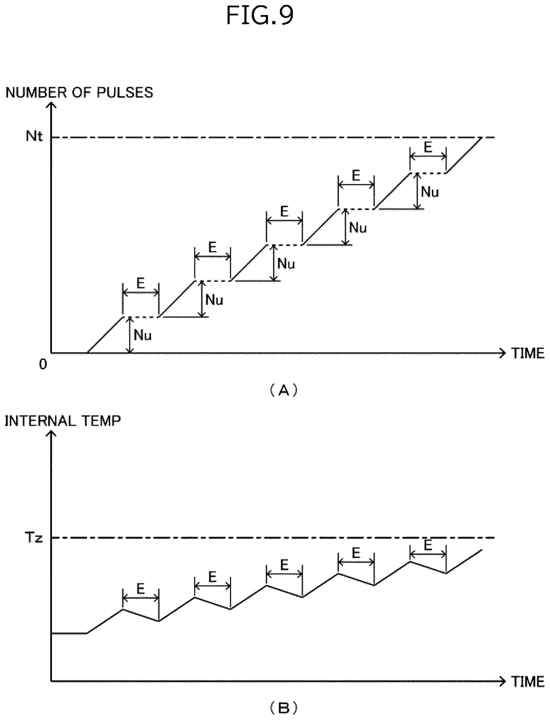

Next, with reference to Fig. 8 and Fig. 9, described are examples of the change in the internal temperature of the motor driver 77 when the electric valve control device 70 inputs the target number Nt of pulses P to the motor driver 77 while the ambient temperature Ta of the motor driver 77 is high.

Fig. 8 and Fig. 9 each include graphs that show time variations of the number of pulses P input to the motor driver 77 and the internal temperature of the motor driver 77. Fig. 8 illustrates the time variations when the target number Nt of pulses P is continuously input. Fig. 9 illustrates the time variations when the pulse-input pausing period is inserted after each unit of the predetermined number Nu of pulses P is continuously input. The predetermined number Nu is smaller than the target number Nt. Fig. 8A and Fig. 9A illustrate relationships between time and the number of pulses input to the motor driver. Fig. 8B and Fig. 9B illustrate relationships between time and the internal temperature of the motor driver 77. In Fig. 8A and Fig. 9A, solid lines represent periods in which a pulse P is input, while dashed lines represent periods in which no pulse P is input.

When, as illustrated in Fig. 8A, the electric valve control device 70 continuously inputs the target number Nt of pulses P to the motor driver 77, the internal temperature of the motor driver 77 rises in response to pulses P input by the electric valve control device 70 as illustrated in Fig. 8B. A relatively large target number Nt causes the internal temperature of the motor driver 77 to exceed the upper-limit temperature Tz.

When, as illustrated in Fig. 9A, the electric valve control device 70 continuously inputs pulses P to the motor driver 77 in units of the predetermined number Nu and inserts the pulse-input pausing period after each unit of the predetermined number Nu of pulses P is input, the internal temperature of the motor driver 77 rises in response to pulses P input by the electric valve control device 70 but falls during the pulse-input pausing period as illustrated in Fig. 9B. This suppresses the rise in the internal temperature of the motor driver 77 when the electric valve control device 70 inputs the target number Nt of pulses P. As a result, it is possible to inhibit the internal temperature of the motor driver 77 from exceeding the upper-limit temperature Tz.

As described above, the electric valve device 1 according to the embodiment includes the electric valve 5 and the electric valve control device 70. The electric valve 5 includes the stepping motor 66. The electric valve control device 70 controls the electric valve 5. The electric valve control device 70 includes the computer 80 configured to input a pulse P to the motor driver 77 connected to the stepping motor 66. The computer 80 is configured to obtain, upon reception of the valve-opening-degree changing instruction including the target valve opening degree Dt of the electric valve 5, the target number Nt that is the number of pulses P to be input to the motor driver 77 to change the valve opening degree of the electric valve 5 to the target valve opening degree Dt. The computer 80 is configured to continuously input the target number Nt of pulses P to the motor driver 77 when the ambient temperature Ta of the motor driver 77 is determined not to be high. The computer 80 is configured to obtain the predetermined number Nu that is the number of pulses P to be continuously input to the motor driver 77 when the ambient temperature Ta of the motor driver 77 is determined to be high. The computer 80 is configured to continuously input pulses P to the motor driver 77 in units of the predetermined number Nu until the number of pulses P input to the motor driver 77 reaches the target number Nt and insert the pulse-input pausing period after each unit of the predetermined number Nu of pulses P is input when the ambient temperature Ta is determined to be high.

When the electric valve control device 70 determines that the ambient temperature Ta of the motor driver 77 is not high, the electric valve control device 70 continuously inputs the target number Nt of pulses P to the motor driver 77 at one time. When the electric valve control device 70 determines that the ambient temperature Ta of the motor driver 77 is high, the electric valve control device 70 does not input the target number Nt of pulses P to the motor driver 77 at one time but inputs pulses P to the motor driver 77 in units of the predetermined number Nu. The electric valve control device 70 inserts the pulse-input pausing period where no pulse P is input after each unit of the predetermined number Nu of pulses P is input.
Therefore, the motor driver 77 can be inhibited from continuous long-term operation, thereby suppressing the rise in the internal temperature of the motor driver 77.

The stepping motor 66 includes the A-phase stator 61 and the B-phase stator 62. The motor driver 77 supplies the driving current corresponding to a pulse P to the A-phase stator 61 and the B-phase stator 62. The pulse P input to the motor driver 77 immediately before the pulse-input pausing period is a pulse P (P[1], P[3], P[5], or P[7]) that directs the motor driver 77 to supply the driving current exclusively to either the A-phase stator 61 or the B-phase stator 62. In this configuration, the detent torque of the stepping motor 66 during the pulse-input pausing period can be relatively large. This inhibits the rotor 41 from rotating due to vibrations or the like.

The duration E of the pulse-input pausing period is longer than or equal to the duration required for inputting the predetermined number Nu of pulses P immediately before the pulse-input pausing period. In this configuration, an insufficient duration of the pulse-input pausing period with respect to pulses P continuously input immediately before the pulse-input pausing period can be inhibited.

In the electric valve control device 70 described above, the predetermined number Nu is stored in the ROM as a fixed value, but the predetermined number Nu is not limited to a fixed one. In the electric valve control device 70, the predetermined number Nu may correspond to the ambient temperature Ta of the motor driver 77. The electric valve control device 70 can be configured such that the predetermined number Nu decreases as the ambient temperature Ta increases. In the electric valve control device 70, for example, (i) when the ambient temperature Ta is higher than or equal to the high-temperature threshold Th and lower than the high-temperature threshold Th plus 10°C (Th ≤ Ta < Th + 10°C), the predetermined number Nu is set to 24, (ii) when the ambient temperature Ta is higher than or equal to the high-temperature threshold Th plus 10°C and lower than the high-temperature threshold Th plus 20°C (Th + 10°C ≤ Ta < Th + 20°C), the predetermined number Nu is set to 16, and (iii) when the ambient temperature Ta is higher than or equal to the high-temperature threshold Th plus 20°C (Th + 20°C ≤ Ta), the predetermined number Nu is set to 8.

In the electric valve control device 70 described above, the duration E of the pulse-input pausing period stored in the ROM is a fixed value but is not limited to a fixed value. In the electric valve control device 70, the duration E may correspond to the ambient temperature Ta of the motor driver 77. The electric valve control device 70 can be configured such that the duration E increases as the ambient temperature Ta increases. In the electric valve control device 70, for example, (i) when the ambient temperature Ta is higher than or equal to the high-temperature threshold Th and lower than the high-temperature threshold Th plus 10°C (Th ≤ Ta < Th + 10°C), the duration E is set to 192 ms, (ii) when the ambient temperature Ta is higher than or equal to the high-temperature threshold Th plus 10°C and lower than the high-temperature threshold Th plus 20°C (Th + 10°C ≤ Ta < Th + 20°C), the duration E is set to 384 ms, and (iii) when the ambient temperature Ta is higher than or equal to the high-temperature threshold Th plus 20°C (Th + 20°C ≤ Ta), the duration E is set to 576 ms. Alternatively, the electric valve control device 70 may end the pulse-input pausing period when the ambient temperature Ta falls by a predetermined temperature (1 to 10°C, for example) during the pulse-input pausing period.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member.

The embodiment of the present invention is described above. The present invention, however, is not limited to this embodiment. Embodiments obtained by a person skilled in the art appropriately adding, removing, or modifying components according to the embodiment described above, and an embodiment obtained by appropriately combining features of the embodiment are included in the scope of the present invention without departing from the spirit of the present invention.

### Reference Signs List

1 ... electric valve device, 5 ... electric valve, 10 ... valve body, 11 ... body member, 11a ... fitting hole, 11b ... through hole, 11d ... planar part, 13 ... connection member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... valve portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... coil, 62 ... B-phase stator, 62a ... pole tooth, 62b ... pole tooth, 62c ... coil, 66 ... stepping motor, 70 ... electric valve control device, 71 ... circuit board, 75 ... non-volatile memory, 76 ... communication device, 77 ... motor driver, 80 ... computer, 100 ... air conditioning system, 101 ... compressor, 102 ... condenser, 103 ... evaporator, 105 ... pipe, 110 ... air conditioner control device, 120 ... wired communication bus, A1 ... terminal, A2 ... terminal, B1 ... terminal, B2 ... terminal, C1 ... first counter value, C2 ... second counter value, G ... data table, L ... axis, Tz ... upper-limit temperature

## Claims

1. An electric valve control device for controlling an electric valve that includes a stepping motor, the electric valve control device comprising:
a controller configured to input a pulse to a motor driver connected to the stepping motor,
wherein the motor driver supplies a driving current corresponding to the pulse to the stepping motor,
wherein the controller is configured to obtain, upon reception of a valve-opening-degree changing instruction including a target valve opening degree of the electric valve, a target number that is a number of pulses to be input to the motor driver to change a valve opening degree of the electric valve to the target valve opening degree,
wherein the controller is configured to continuously input the target number of pulses to the motor driver when an ambient temperature of the motor driver is determined not to be high, and
wherein the controller is configured to obtain a predetermined number that is a number of pulses to be continuously input to the motor driver, continuously input pulses to the motor driver in units of the predetermined number until the number of pulses input to the motor driver reaches the target number, and insert a pulse-input pausing period after each unit of the predetermined number of pulses is input, when the ambient temperature is determined to be high.

2. The electric valve control device according to Claim 1,
wherein the stepping motor includes an A-phase stator and a B-phase stator,
wherein the motor driver supplies the driving current corresponding to the pulse to the A-phase stator and the B-phase stator, and
wherein a pulse input to the motor driver immediately before the pulse-input pausing period is a pulse that directs the motor driver to supply the driving current exclusively to either the A-phase stator or the B-phase stator.

3. The electric valve control device according to Claim 1 or Claim 2, wherein a duration of the pulse-input pausing period is longer than or equal to a duration required for inputting the predetermined number of pulses immediately before the pulse-input pausing period.

4. An electric valve device comprising the electric valve that includes the stepping motor and the electric valve control device according to any one of Claims 1 to 3.
